Europäisches Patentamt

European Patent Office

Office européen des brevets

(11) Veröffentlichungsnummer: **0 521 306 A2**

# (12) EUROPÄISCHE PATENTANMELDUNG

(21) Anmeldenummer: **92109379.5**

(22) Anmeldetag: **03.06.92**

(51) Int. Cl.⁵: **B01D 50/00**, B01D 45/12

(30) Priorität: **10.06.91 DE 4119124**
**10.06.91 DE 4119123**

(43) Veröffentlichungstag der Anmeldung:
**07.01.93 Patentblatt 93/01**

(84) Benannte Vertragsstaaten:
**AT BE CH DE DK ES FR GB GR IT LI LU NL PT SE**

(71) Anmelder: **FIRMA ULLI WEINBERG Neuentwicklung und Industriewerbung**
Bahnhofstrasse 22/24
W-8452 Roth(DE)

(72) Erfinder: **Weinberg, Ulli**
Bahnhofstrasse 22/24
W-8452 Roth(DE)

(74) Vertreter: **LOUIS, PÖHLAU, LOHRENTZ & SEGETH**
Kesslerplatz 1 Postfach 3055
W-8500 Nürnberg-1(DE)

(54) Verfahren zum Beseitigen von Partikeln und Anlage zur Durchführung des Verfahrens.

(57) Ein wird ein Verfahren und eine Vorrichtung zum Beseitigen von Partikeln beschrieben, wobei an einem Saugorgan (12') ein Unterdruck erzeugt wird. Die Partikel (20') werden in einem Zyklonabscheider (14') einer trockenen ersten Fraktionierung in erste Partikel (22') und in vergleichsweise kleine zweite Partikel (24') unterworfen, die zweiten Partikel (24') werden dann in einen Wirbelwäscher (26') eingebracht, in welchem sie einer zweiten Fraktionierung in dritte Partikel (32') und in kleine vierte Partikel (34') unterworfen werden. Anschließend werden die benetzten vierten Partikel (34') in einen Tropfenabscheider (36') eingebracht, in welchem sie in fünfte Partikel (50') und in vergleichsweise kleine sechste Partikel (42') unterteilt werden, wonach die sechsten Partikel (42') in einen Entfeuchter (44') eingebracht werden, wobei eine vierte Fraktionierung in siebente Partikel (56') und im Vergleich hierzu kleine achte Aerosolteilchen (58') erfolgt. Die Aerosolteilchen (58') werden dann in einen elektrostatischen Aerosolabscheider (60') eingebracht und abgeschieden, so daß durch die Unterdruckerzeugungseinrichtung (18') Reinstluft austritt.

FIG.1

Die Erfindung betrifft ein Verfahren zum Beseitigen von Partikeln, insbes. von gesundheitsgefährdenden Partikeln, wobei an einem Saugorgan mittels einer Unterdruckeinrichtung ein Unterdruck erzeugt wird, sowie eine Anlage zur Durchführung dieses Verfahrens mit einer Einrichtung zur Erzeugung eines Unterdrucks, einem Saugorgan und einer zwischen dem Saugorgan und der Unterdruckerzeugungseinrichtung vorgesehenen Abscheidungseinrichtung für die Partikel.

Bei den gesundheitsgefährdenden Partikeln handelt es sich insbes. um Asbestpartikel, wobei sich bei den bislang zur Anwendung gelangenden Verfahren zum Beseitigen derartiger Partikel das Problem ergibt, daß die abgeschiedenen Partikel selbst aufwendig entsorgt werden müssen, nachdem vermieden werden muß, daß die entsorgten Partikel selbst wieder in die Umgebung gelangen.

Eine Anlage der oben beschriebenen Art kommt bspw. zur Entsorgung von Bauschutt oder zur Entsorgung von Staub, insbes. zur Entsorgung gesundheitsgefährdender Partikel wie Asbestpartikel zur Anwendung. Bei den bislang zur Anwendung gelangenden Anlagen der gattungsgemäßen Art weist die Abscheidungseinrichtung mindestens ein Filterelement auf, an welchem die zu entsorgenden Partikel festgehalten werden sollen. Hierbei ergibt sich jedoch das Problem, daß die Abscheidungseinrichtung selbst auch wieder aufwendig entsorgt werden muß, nachdem vermieden werden soll, daß die entsorgten Asbestpartikel wieder in die Umgebung gelangen.

Der Erfindung liegt die Aufgabe zugrunde, ein Verfahren der eingangs genannten Art und eine dafür vorgesehene Anlage zu schaffen, wobei es zuverlässig und absolut sauber möglich ist, Partikel, bei denen es sich insbes. um Asbestpartikel handeln kann, zu entsorgen, wobei die entsorgten Partikel in der zur Durchführung des Verfahrens angewandten Anlage verbleiben.

Diese Aufgabe wird verfahrensgemäß dadurch gelöst, daß die Partikel in einem an das Saugorgan angeschlossenen Zyklonabscheider einer trockenen ersten Fraktionierung in relativ große erste Partikel und in vergleichsweise kleine zweite Partikel unterworfen werden, daß dann die trockenen zweiten Partikel in einen Wirbelwäscher eingebracht werden, in welchem sie mit Flüssigkeit benetzt und einer zweiten Fraktionierung in relativ große dritte und vergleichsweise kleine vierte Partikel unterworfen werden, daß anschließend die mit Flüssigkeit benetzten Partikel in einen Tropfenabscheider eingebracht werden, in welchem sie einer dritten Fraktionierung in relativ große fünfte und in vergleichsweise kleine sechste Partikel unterworfen werden, daß danach die mit Flüssigkeit benetzten sechsten Partikel in einen Entfeuchter eingebracht werden, in welchem sie zuerst erwärmt und anschließend entspannt und kondensiert werden, wobei eine vierte Fraktionierung in relativ große siebente Partikel und vergleichsweise kleine achte Aerosolteilchen erfolgt, und daß die Aerosolteilchen dann in einen elektrostatischen Aerosolabscheider eingebracht werden, in welchem sie durch elektrostatische Kräfte abgeschieden werden, so daß durch die an den Aerosolabscheider angeschlossene Unterdruckerzeugungseinrichtung Reinstluft austritt.

Mit dem erfindungsgemäßen Verfahren ergibt sich also der Vorteil, daß die zu entsorgenden Partikel durch mehrfache Fraktionierung zuverlässig in der Anlage, d.h. im System verbleiben, wobei durch die Benetzung der jeweiligen Partikel mit Flüssigkeit absolute Sauberkeit gewährleistet wird. Am Ausgang des Entfeuchters sind nurmehr so kleine Aerosolteilchen vorhanden, daß diese infolge ihrer Kleinheit nicht mehr ausreichend mit elektrostatischer Ladung befrachtet werden können, um zuverlässig im elektrostatischen Feld des Aerosolabscheiders an eine entsprechende Elektrode angezogen zu werden. Erst dadurch, daß die Kondensationskeime bildenden Aerosolteilchen noch mit Flüssigkeit benetzt, d.h. umgeben sind, ergibt sich hier eine Teilchengröße, die ausreichend mit elektrischer Ladung beladen werden kann, so daß die elektrisch geladenen, mit Flüssigkeit benetzten Aerosolteilchen durch elektrostatische Kräfte im Aerosolabscheider abgeschieden werden können. Die mit Flüssigkeit benetzten Aerosolteilchen können dann an den Elektroden des Aerosolabscheiders größere Tröpfchen bilden, die bei entsprechender Größe infolge ihres Gewichtes von den Elektroden abrinnen können.

Eine in sich geschlossene Verfahrensweise, d.h. ein geschlossenes System, ergibt sich, wenn die ersten Partikel in einem zum Zyklonabscheider zugehörigen ersten Behälter, die mit Flüssigkeit benetzten dritten Partikel in einem zum Wirbelwäscher zugehörigen zweiten Behälter, die mit Flüssigkeit benetzten fünften Partikel in einem zum Tropfenabscheider zugehörigen dritten Behälter, die mit Flüssigkeit benetzten siebenten Partikel in einem zum Entfeuchter zugehörigen vierten Behälter und die mit Flüssigkeit benetzten, Kondensationskeime bildenden Aerosolteilchen in einem zum elektrostatischen Aerosolabscheider zugehörigen Sammelbehälter gesammelt werden.

Um die im ersten Behälter gesammelten trockenen ersten Partikel im ersten Behälter festzuhalten, d.h. einen Transport der ersten Partikel vom ersten Behälter durch die zur Durchführung des Verfahrens vorgesehene Vorrichtung hindurch zu vermeiden, kann es zweckmäßig sein, den zweiten bis vierten mit entsprechenden Partikeln befrachteter Flüssigkeit gefüllten Behälter mit dem ersten Behälter zu verbinden, um die Flüssigkeiten miteinander und mit den im ersten Behälter befindlichen trockenen ersten Partikeln zu einem Schlamm zu vermischen. Bei Durchführung des erfindungsgemäßen Verfahrens ist es also möglich, außer der angestrebten Reinstluft trockene erste Partikel, mit entsprechenden Partikeln befrachtete Flüssigkeiten oder ein Schlammgemisch aus den genannten Flüssigkeiten und den ersten trockenen Partikeln zu erzeugen. Ein solches Schlammgemisch ist wesentlich einfacher zu entsorgen als trockene, zu einer Staubbildung neigende Partikel.

Mit dem erfindungsgemäßen Verfahren ist es in ausgezeichneter Weise möglich, bspw. den Anteil an gesundheitsgefährdenden Asbestpartikeln in einem Raum auf ein absolutes Minimum zu reduzieren, das um größenordnungsmäßig 75% oder mehr unter dem bislang zulässigen Entsorgungs-Wert liegt.

Die der Erfindung zugrundeliegende Aufgabe wird vorrichtungsgemäß dadurch gelöst, daß die Abscheidungseinrichtung zur groben Partikel-Vorabscheidung einen einen Einlaß, einen Auslaß und einen Partikelsammelbehälter aufweisenden Zyklonabscheider, mindestens einen an den Zyklonabscheider angeschlossenen, einen Einlaß, einen Auslaß und einen Flüssigkeitssammelbehälter aufweisenden naßmechanischen Abscheider und einen an den mindestens einen bzw. an den vom Zyklonabscheider in Strömungsrichtung am weitesten entfernten letzten naßmechanischen Abscheider angeschlossenen, einen Einlaß, einen Auslaß und einen Wassersammelbehälter aufweisenden Endabscheider mit einem mechanischen Tropfenabscheider und einem elektrostatischen Entfeuchter aufweist, wobei der Einlaß des Zyklonabscheiders mit dem Saugorgan der Anlage, der Auslaß des Zyklonabscheiders mit dem Einlaß des mindestens einen bzw. in Strömungsrichtung ersten naßmechanischen Abscheiders, der Auslaß des mindestens einen bzw. letzten naßmechanischen Abscheiders mit dem Einlaß des Endabscheiders und dessen Auslaß mit der Unterdruckerzeugungseinrichtung mittels Rohrleitungen verbunden ist.

Mit Hilfe des Zyklonabscheiders ist es möglich, zumindest eine grobe Vorabscheidung vorzunehmen, wobei in dem dem Zyklonabscheider zugeordnetenPartikelsammelbehälter bereits der größte Teil der zu entsorgenden Partikel bzw. insbes. die vergleichsweise großen bzw. schweren Partikel in an sich bei solchen Zyklonabscheidern bekannter Art und Weise abgeschieden und gesammelt werden. Das bedeutet, daß am Auslaß des Zyklonabscheiders im Vergleich zu dem durch das Saugorgan in die Anlage eingesaugten Partikel-Spektrum nur mehr eine kleine Quantität von Partikeln kleiner Größe vorhanden sind bzw. durch den Auslaß des Zyklonabscheiders dem bzw. dem in Strömungsrichtung ersten naßmechanischen Abscheider zugeführt werden. In dem mindestens einen naßmechanischen Abscheider wird dann ein wesentlicher Anteil der nach dem Zyklonabscheider verbleibenden kleinen Partikel in der von bekannten naßmechanischen Abscheidern üblichen Weise im Flüssigkeitsbad des mindestens einen naßmechanischen Abscheiders festgehalten. Am Auslaß des in Strömungsrichtung letzten naßmechanischen Abscheiders ist der Anteil der verbleibenden kleinen Partikel folglich nur mehr sehr gering, so daß es im Endabscheider dann zuverlässig möglich ist, die in ihn eingeleiteten kleinen Partikel festzuhalten. Durch die dem Endabscheider nachgeordnete Unterdruckerezeugungseinrichtung strömt dann Reinluft durch.

Mit einer solchen Anlage der oben beschriebenen Art wurden in einem asbestverseuchten Raum Versuche, d.h. nach der VDI-Richtlinie 3492 "Messen anorganischer faserförmiger Partikel in der Außenluft; Rasterelektronenmikroskopisches Verfahren" Messungen der Faserkonzentration am Ausgang der Unterdruckerzeugungseinrichtung durchgeführt, wobei die in der nachfolgenden Tabelle angegebenen Bedingungen gegeben waren und die in der Tabelle angegebenen Ergebnisse erzielt wurden:

TABELLE:

| | |
|---|---|
| Probenluftmengen (m3) | 4,956 |
| effektive Filterfläche (mm²) | 380 |
| ausgezählte Bildfelder | 400 |
| Zählfeldfläche (mm²) | 1,0 |
| <u>Gezählte Fasern</u> | |
| Asbest 2,5µm ≤ L ≤ 5µm | 9 |
| Asbest L ≥ 5µm | 3 |
| Summe Calciumsulfatfasern | 7 |
| Summe sonst. anorg. Fasern | 16 |
| Konzentration (Meßwert) (F/m$^3$) | |
| Asbest 2,5µm ≤ L ≤ 5µm | 690 |
| Asbest L ≥ 5µm | 230 |
| Summe Calciumsulfatfasern | 537 |
| Summe sonst.anorgan.Fasern | 1227 |
| 95% Vertrauensintervall (F/m$^3$) | 47-672 |
| Asbest ≥ 5µm | |

Aus der Tabelle ist ersichtlich, daß es erfindungsgemäß in ausgezeichneter Weise möglich ist, den Anteil an gesundheitsgefährdenden Asbestpartikeln auf ein absolutes Minimum zu reduzieren, welches um ca. 75% unter dem zulässigen Wert liegt.

Als zweckmäßig hat es sich bei der erfindungsgemäßen Anlage erwiesen, wenn der Zyklonabscheider ein lotrechtes Zentralrohr und ein das Zentralrohr in einem Abstand umgebendes zylindrisches Gehäuse aufweist, wobei der Einlaß in den Zyklonabscheider an dessen oberen Endabschnitt in tangentialer und gegen die vertikale Längsachse des Zyklonabscheiders geneigter Richtung in den Mantel des Gehäuses einmündet, der Auslaß des Zyklonabscheiders aus dem oberen Endabschnitt des Zentralrohres axial ausmündet, und der Mantel des Gehäuses unterseitig mit einem nach unten konisch verjüngten trichterförmigen Trennraum ausgebildet ist, welcher den unterseitigen Endabschnitt des Zentralrohres umgibt und welcher mit einem Verbindungsabschnitt in den Partikelsammelbehälter einmündet. Durch eine solche Ausbildung des Zyklonabscheiders bzw. seines in den Mantel des Gehäuses einmündenden Einlasses ergibt sich im Ringraum zwischen dem Zentralrohr und dem Gehäuse eine schraubenlinienförmige Bewegung der durch den Einlaß in den Zyklonabscheider hinein beförderten Partikel, wobei die Ganghöhe der schraubenlinienförmigen Transportbewegung der Partikel von der auf die einzelnen Partikel wirkenden Gravitation und vom am Eingang in den Zyklonabscheider gegebenen Unterdruck abhängig ist.

Vorteilhaft ist es, wenn der unterseitige Endabschnitt des Zentralrohres mit einer konischen Erweiterung ausgebildet ist, wobei der Außendurchmesser des unterseitigen Randes der Erweiterung größer ist als der lichte Innendurchmesser des Mantels des Gehäuses. Durch eine solche Ausbildung ergibt sich insbes. für relativ große Partikel im trichterförmigen Trennraum eine sogenannte Falle, durch welche die erwähnten relativ großen Partikel sicher und zuverlässig daran gehindert werden, im Inneren des Zentralrohres zu dem mindestens einen an den Zyklonabscheider angeschlossenen naßmechanischen Abscheider zu gelangen. Vielmehr werden durch die erwähnte Falle die relativ großen und schweren Partikel durch den Verbindungsabschnitt in den Partikelsammelbehälter befördert.

Um den mit Partikel angefüllten Partikelsammelbehälter problemlos vom Zyklonabscheider entfernen und gegebenenfalls durch einen unbenutzten leeren Partikelsammelbehälter ersetzen zu können, ist es vorteilhaft, wenn der Verbindungsabschnitt zwischen trichterförmigem Trennraum des Zyklonabscheiders und dem Partikelsammelbehälter zwei Rohrabschnitte aufweist, wobei jeder Rohrabschnitt mit einem Verschlußschieber und einem Montageflansch zur abdichtenden Verbindung der beiden Rohrabschnitte

4

ausgebildet ist. Werden mit Hilfe der beiden Schieber die zugehörigen Rohrabschnitte abgedichtet, so ist es einfach und problemlos möglich, die Verbindung der beiden Montageflansche zu lösen und den mit Hilfe des entsprechenden Verschlußschiebers abgedichteten Partikelsammelbehälter vom Zyklonabscheider, der hierbei mit Hilfe des zweiten Verschlußschiebers abdichtend abgeschlossen ist, zu entfernen und durch einen leeren neuen Partikelsammelbehälter zu ersetzen. Sobald am Zyklonabscheider ein neuer leerer Partikelsammelbehälter mittels der Montageflansche befestigt ist, können die Verschlußschieber wieder in die Betriebsstellung verstellt werden, in welcher durch den Verbindungsabschnitt zwischen dem trichterförmigen Trennraum des Zyklonabscheiders und dem leeren neuen Partikelsammelbehälter eine fluidische Verbindung hergestellt wird.

Eine unerwünschte Anlagerung einer größeren Quantität von zu entsorgenden Partikeln an der Innenoberfläche des trichterförmigen Trennraumes des Zyklonabscheiders wird verhindert, wenn der trichterförmige Trennraum des Zyklonabscheiders mit einer Rütteleinrichtung versehen ist. Bei dieser Rütteleinrichtung kann es sich bspw. um einen elektromechanischen Rüttler handeln.

In das Gehäuse des Zyklonabscheiders münden vorzugsweise oberseitig Düsen ein, die zum Einleiten einer Reinigungs- bzw. Partikelbindeflüssigkeit in den ringförmigen Zwischenraum zwischen dem Zentralrohr und dem Gehäuse bzw. zum Besprühen der Außenoberfläche des Zentralrohres und der Innenoberfläche des Gehäuses vorgesehen sind. Mit Hilfe der zuletzt genannten Düsen ist es demnach möglich, den Zyklonabscheider im Bedarfsfall zu reinigen bzw. die in den Zyklonabscheider eingesaugten Partikel zu benetzen, um sie zu binden und im Partikelsammelbehälter sicher festzuhalten. Mit Flüssigkeit benetzte Partikel werden zumindest größtenteils daran gehindert, durch das Zentralrohr des Zyklonabscheiders zu dem mindestens einen naßmechanischen Abscheider weitertransportiert zu werden. Damit ergibt sich mit der erfindungsgemäßen Anlage ein gutes Abscheideverhalten.

Als vorteilhaft hat es sich erwiesen, wenn bei der erfindungsgemäßen Anlage der mindestens eine naßmechanische Abscheider ein vertikales Zentralrohr und ein das Zentralrohr in einem Abstand umgebendes zylindrisches Gehäuse aufweist, wobei der Einlaß in den entsprechenden Abscheider in den oberen Endabschnitt des zugehörigen Zentralrohres in axialer Richtung einmündet, in welchem zum Ablenken von Flüssigkeit gegen die Innenoberfläche des Zentralrohres ein sich nach unten konisch erweiternder Ablenkkörper vorgesehen ist, der Auslaß am oberen Endabschnitt des das entsprechende Zentralrohr umgebenden Mantels des Gehäuses vorgesehen und in tangentialer und gegen die zentrale Längsachse geneigter Richtung orientiert ist, und das Gehäuse unterseitig mit einem Erweiterungsraum ausgebildet ist, welcher den unterseitigen Endabschnitt des Zentralrohres umgibt und welcher mit einem Verbindungsrohr in den zugehörigen Wassersammelbehälter einmündet. Der/jeder naßmechanische Abscheider ist demnach bzgl. Zentralrohr und zylindrischem Gehäuse ähnlich ausgebildet wie der weiter oben beschriebene Zyklonabscheider.

Wenn die erfindungsgemäße Anlage mehr als einen naßmechanischen Abscheider aufweist, so sind diese nacheinander in Reihe geschaltet, d.h. es ist jeweils der Auslaß eines naßmechanischen Abscheiders mit dem Einlaß des nachfolgenden naßmechanischen Abscheiders mittels einer entsprechenden Rohrleitung verbunden.

Mit Hilfe des zuletzt erwähnten Ablenkkörpers im oberen Endabschnitt des entsprechenden Zentralrohres ergibt sich eine sichere Benetzung der Innenrohrfläche des besagten Zentralrohres, so daß die mit einem entsprechend geringen Anteil zu filtrierender bzw. zu entsorgender Partikel befrachtete Flüssigkeit an der Innenoberfläche des entsprechenden Zentralrohres hinunterrinnt, um in den zugehörigen Erweiterungsraum hineinzufließen. Der besagte Ablenkkörper kann hierbei unbeweglich oder um seine Längsachse, die mit der zentralen Längsachse des entsprechenden naßmechanischen Abscheiders bzw. dessen Zentralrohr axial fluchtet, drehbar sein. Zu diesem Zweck kann eine externe Antriebseinrichtung, d.h. ein Antriebsmotor vorgesehen sein; es ist jedoch auch möglich, den Ablenkkörper einfach durch die entsprechende Beaufschlagung mit mit zu filtrierenden Partikeln beladener Flüssigkeit anzutreiben, wenn der Ablenkkörper mit geeigneten Schaufeln bzw. Antriebsflügeln ausgebildet ist.

Der/jeder naßmechanische Abscheider d.h. sein Erweiterungsraum und der untere Endabschnitt seines Zentralrohres sind mit Wasser gefüllt, so daß zwischen dem Innenraum des Zentralrohres und dem das Zentralrohr ringförmig umgebenden Raum zwischen Zentralrohr und zylindrischem Gehäuse eine Wassersperre nach Art eines Syphons gegeben ist. Der hydrostatische Druck der genannten Wassersperre entspricht der Höhe des Wasserspiegels über dem unteren Rand des entsprechenden Zentralrohres. Der Unterdruck der Unterdruckerzeugungseinrichtung muß also größer sein als der besagte hydrostatische Druck bzw. die Summe der hydrostatischen Drucke bei Anwendung von mehr als einem naßmechanischen Abscheider.

Als zweckmäßig hat es sich erwiesen, wenn der unterseitige Endabschnitt des Zentralrohres des/jedes naßmechanischen Abscheiders mit einem nach oben zusammenlaufenden rotationssymmetrisch geformten Umlenkkörper ausgebildet ist, der zur Einstellung eines gewünschten, um die zentrale Längsachse umlaufenden Umlenkspaltes in axialer Richtung relativ zum Zentralrohr verstellbar ist. Durch Einstellung eines bestimmten gewünschten umlaufenden Umlenkspaltes ist es nicht nur möglich, die in die Wassersperre des entsprechenden naßmechanischen Abscheiders einströmende Strömungsmittelmenge, die sich primär aus Luft und sekundär aus mit kleinen Partikeln befrachteter Flüssigkeit zusammensetzt, wunschgemäß einzustellen, sondern durch Einstellung eines gewünschten umlaufenden Umlenkspaltes ist es insbes. auch möglich, die unterdruckbedingte Aufwirbelung der Wassersperre, d.h. die in der aufgewirbelten Wassersperre befindlichen Luftblasen sowohl in ihrer Größe als auch in ihrer Anzahl pro Zeiteinheit einzustellen.

Der Umlenkspalt ist vorzugsweise durch einen das Zentralrohr des entsprechenden naßmechanischen Abscheiders umschließenden ersten Umlenkring und einen den rotationssymmetrisch geformten Umlenkkörper umgebenden zweiten Umlenkring begrenzt, bzw. festgelegt.

Um die im Betrieb der Anlage aufgewirbelte Wassersperre, d.h. die in der aufgewirbelten Wassersperre erzeugten Luftblasen, die noch mit einer kleinen Quantität zu entsorgender Partikel befrachtet sein können, zu vergleichmäßigen, und hierdurch reproduzierbare Betriebseigenschaften zu realisieren, ist es vorteilhaft, wenn am unteren Endabschnitt des Zentralrohres des entsprechenden naßmechanischen Abscheiders zwischen dem Zentralrohr und dem Mantel des Gehäuses mindestens ein Gitterring vorgesehen ist. Als vorteilhaft hat es sich erwiesen, wenn voneinander beabstandete wenigstens zwei Gitterringe vorgesehen sind.

Demselben Zweck, d.h. der Vergleichmäßigung sowie der Verkleinerung und reproduzierbaren Einstellung der evtl. mit zu entsorgenden Partikel befrachteten Luftblasen in der aufgewirbelten Wassersperre des mindestens einen bzw. des mit dem Zyklonabscheider verbundenen ersten naßmechanischen Abscheiders dient es, wenn in den Erweiterungsraum des besagten naßmechanischen Abscheiders in der Nachbarschaft des Mantels seines Gehäuses Fächerdüsen zum Einsprühen von Flüssigkeit hineinragen. Mit Hilfe dieser Fächerdüsen, die entlang des Umfangs des bzw. des ersten naßmechanischen Abscheiders gleichmäßig verteilt vorgesehen sind, werden nicht nur die im Betrieb aufsprudelnde Wassersperre und die in ihr enthaltenen Luftblasen vergleichmäßigt, sondern es erfolgt hierdurch gleichzeitig auch eine Abbremsung der evtl. noch mit zu entsorgenden Partikel befrachteten Luftblasen. Hierdurch ergibt sich im an den Zyklonabscheider angeschlossenen ersten naßmechanischen Abscheider eine weitere erhebliche Reduktion der in der Anlage weitertransportierten, zu entsorgenden Partikel, die in den weiteren Entsorgungsstufen der Anlage bis auf eine vernachlässigbar geringe Anzahl Partikel in der Anlage festgehalten werden.

Um auch den zu dem mindestens einen naßmechanischen Abscheider zugehörigen Wassersammelbehälter im Bedarfsfall, d.h. wenn er mit mit zu entsorgenden Partikeln befrachtetem Abwasser gefüllt ist, aus der Anlage problemlos und sicher entnehmen und durch einen ungebrauchten leeren neuen Wassersammelbehälter ersetzen zu können, ist es vorteilhaft, wenn das Verbindungsrohr zwischen dem Erweiterungsraum des entsprechenden naßmechanischen Abscheiders und dem zugehörigen Wassersammelbehälter zwei Rohrabschnitte aufweist, wobei jeder Rohrabschnitt mit einem Sperrventil und einem Verbindungsflansch zur abdichtenden Verbindung der beiden Rohrabschnitte ausgebildet ist. Durch eine solche Ausbildung ist der entsprechende Wassersammelbehälter an sich so zu handhaben wie der weiter oben beschriebene, zum Zyklonabscheider zugehörige Partikelsammelbehälter, so daß es nicht erforderlich ist, hierauf detailliert einzugehen.

Der Erweiterungsraum des/jedes naßmechanischen Abscheiders ist vorzugsweise mit einer auf hydrostatischen Druck ansprechenden Schalteinrichtung versehen. Mit Hilfe dieser Schalteinrichtung ist es automatisch möglich, den Wasserstand und damit den oben erwähnten hydrostatischen Druck der Wasserfalle bzw. des Syphons im entsprechenden naßmechanischen Abscheider wunschgemäß einzustellen bzw. zu regulieren. Zu diesem Zweck kann in den Erweiterungsraum des/jedes naßmechanischen Abscheiders ein Frischwasserzulauf einmünden, der mit einem Absperrhahn versehen ist. Dieser Absperrhahn ist dann bei einer automatisch wirksamen Anlage mit der zuletzt erwähnten, auf hydrostatischen Druck ansprechenden Schalteinrichtung passend zusammengeschaltet. Selbstverständlich ist es auch möglich, den entsprechenden Absperrhahn manuell zu betätigen, um den zugehörigen naßmechanischen Abscheider mit einer bestimmten Frischwassermenge zu befüllen.

Vorteilhaft ist es, wenn in das Zentralrohr des mindestens einen bzw. des mit den Zyklonabscheider verbundenen ersten naßmechanischen Abscheiders oberseitig eine Düse einmündet, die zum Beaufschlagen des entsprechenden Ablenkkörpers mit Flüssigkeit vorgesehen ist, wobei die Düse über eine Pumpe mit dem Erweiterungsraum des bzw. des ersten naßmechanischen Abscheiders fluidisch verbunden ist. Auf diese Weise ergibt sich zwischen dem mit Wasser nach Art eines Syphons gefüllten Erweiterungsraum des bzw. des ersten naßmechanischen Abscheiders, der besagte Pumpen und der in den genannten naßmechanischen Abscheider einmündenden Düse ein geschlossener Kreislauf erwähnten Pumpe sind vorzugsweise auch die in den Zyklonabscheider einmündenden Düsen und die Fächerdüsen des bzw. des ersten naßmechanischen Abscheiders fluidisch verbunden, wobei in der die Pumpe mit den Düsen des Zyklonabscheiders verbindenden Rohrleitung vorzugsweise eine Zeitsteuerventileinrichtung vorgesehen sein kann. Mit Hilfe dieser Zeitsteuerventileinrichtung ist es in vorteilhafter Weise möglich, die in den Zyklonabscheider einmündenden Düsen impulsweise in bestimmten Zeitabständen zu aktivieren, um den Zyklonabscheider zeitlich aufeinanderfolgend immer wieder einmal mit Flüssigkeit zu beaufschlagen und eine Reinigungswirkung und/oder eine Partikel-Bindewirkung zu erzielen.

Als zweckmäßig hat es sich herausgestellt, wenn der Endabscheider ein vertikales Zentralrohr und ein das Zentralrohr in einem Abstand umgebendes zylindrisches Gehäuse aufweist, wobei der Einlaß in den Endabscheider in den oberen Endabschnitt des Zentralrohres axial einmündet, in welchem zum Ablenken von Flüssigkeit gegen die innere Oberfläche des Zentralrohres ein sich nach unten konisch erweiternder Ablenkkörper vorgesehen ist, dessen Auslaß sich am oberen Endabschnitt des Gehäuses befindet, und das Gehäuse unterseitig einen Erweiterungsraum aufweist, welcher den unterseitigen Endabschnitt des Zentralrohres umgibt und welcher mit einem Verbindungsrohr in den zugehörigen Wassersammelbehälter einmündet. Der Endabscheider ist demnach ähnlich ausgebildet wie der mindestens eine naßmechanische Abscheider, wobei sich der Endabscheider von dem/jedem naßmechanischen Abscheider dadurch unterscheidet, daß der Endabscheider keine als Syphon ausgebildete Wassersperre besitzt. Durch den Ablenkkörper im Zentralrohr wird die in den Endabscheider eingeleitete, relativ geringe Flüssigkeitsmenge, die noch mit einer sehr kleinen Partikelmenge befrachtet sein kann, gegen die Innenoberfläche des Zentralrohres gelenkt, von welcher die besagte Flüssigkeitsmenge dann nach unten rinnt, um dann im zugehörigen Wassersammelbehälter gesammelt zu werden. Die danach den Ringraum zwischen Zentralrohr und zylindrischem Gehäuse des Endabscheiders durchströmende Luft ist von Partikeln quasi frei, wie eingangs ausgeführt worden ist.

Der unterseitige Endabschnitt des Zentralrohres des Endabscheiders weist zur Ausbildung des mechanischen Tropfenabscheiders vorzugsweise einen gezackten bzw. gezahnten Rand auf. Durch die Zacken bzw. Zähne ergibt sich eine ausgezeichnete Tropfenbildung und folglich ein optimales Abtropfen des restlichen, vergleichsweise kleinen Flüssigkeitsanteiles in den Wassersammelbehälter des Endabscheiders hinein.

Vom unterseitigen Endabschnitt des Zentralrohres des Endabscheiders steht zur Ausbildung des elektrostatischen Entfeuchters vorzugsweise radial ein Schirm weg, dessen Außenoberfläche eine auf einem Potential einer elektrostatischen Hochspannungsquelle befindlichen Elektrode aufweist, und der dem Schirm radial gegenüberliegende Erweiterungsraum ist vorzugsweise an seiner Innenfläche mit einer auf dem Gegenpotential der Hochspannungsquelle befindlichen Gegenelektrode versehen. Zwischen der Elektrode und der Gegenelektrode ergibt sich mit Hilfe der elektrostatischen Hochspannungsquelle ein elektrostatisches Feld, in welchem die restlichen, evtl. mit zu entsorgenden Partikeln befrachteten Flüssigkeitsteilchen ionisiert und an die entsprechende Elektrode bzw. Gegenelektrode angezogen werden. Stromabwärts nach dem elektrischen Feld zwischen Elektrode und Gegenelektrode, d.h. stromabwärts nach dem elektrostatischen Entfeuchter befindet sich demnach im Ringraum zwischen Zentralrohr und zylindrischem Gehäuse des Endabscheiders Reinluft, dessen Fremdpartikelanteil weit unter den zulässigen Grenzen liegt.

Eine optimale Anlagerung von gegebenenfalls mit zu entsorgenden Partikeln befrachteten Flüssigkeitsteilchen infolge einer ausgezeichneten Ionisierung derselben ergibt sich, wenn die Elektrode und die Gegenelektrode jeweils eine spitz genoppte Oberflächenstruktur aufweisen. Durch die zwischen benachbarten Spitzen befindlichen Rinnen können die besagten Flüssigkeitsteilchen wieder in den Sammelbehälter des Endabscheiders abrinnen, wenn sich eine größere Quantität solcher Flüssigkeitspartikel angesammelt hat.

Um auch den zum Endabscheider zugehörigen Wassersammelbehälter im Bedarfsfall problemlos, einfach und sicher aus der erfindungsgemäßen Anlage entfernen und durch einen leeren ungebrauchten Sammelbehälter ersetzen zu können, ist es vorteilhaft, wenn das Verbindungsrohr zwischen dem Erweiterungsraum des Endabscheiders und dem zugehörigen Wassersammelbehälter zwei Rohrabschnitte aufweist, von denen jeder mit einem Absperrventil und einem Verbindungsflansch zum abdichtenden Verbinden der beiden Rohrabschnitte ausgebildet ist. Diese Konstruktion ist ähnlich der zwischen dem/jedem naßmechanischen Abscheider und dem zugehörigen Wassersammelbehälter gegebenen Konstruktion, so daß es nicht erforderlich ist, hierauf detailliert einzugehen.

Eine Verbesserung der Entsorgung von Partikeln, bei denen es sich insbes. um Asbestpartikel handeln kann, wird bei einer Anlage gemäß Anspruch 24 durch die Merkmale des kennzeichnenden Teiles dieses Anspruchs gelöst. Bevorzugte Aus- und Weiterbildungen der zuletzt genannten Anlage sind in den Unteransprüchen 25 bis 33 gekennzeichnet.

Weitere Einzelheiten, Merkmale und Vorteile ergeben sich aus der nachfolgenden Beschreibung von in der Zeichnung dargestellten Ausbildungen der erfindungsgemäßen Anlage zur Durchführung des erfindungsgemäßen Verfahrens zum Beseitigen von Partikeln, bei denen es sich insbes. um gesundheitsgefährdende Partikel wie Asbestpartikel handeln kann. Es zeigen:

Fig. 1 eine schematische Blockdarstellung der Anlage zur Durchführung des Verfahrens zum Entsorgen von Partikeln,

Fig. 2 eine detailliertere Darstellung der Ausbildung der Vorrichtung zum Entsorgen von Partikeln,

Fig. 3 eine Darstellung einer weiteren Ausbildung der Gesamtanlage zur Partikelentsorgung, und

Fig. 4 eine Darstellung der zwischen dem bzw. dem letzten naßmechanischen Abscheider und dem Endabscheider der Anlage gemäß Fig. 3 vorgesehenen Entfeuchtungseinrichtung.

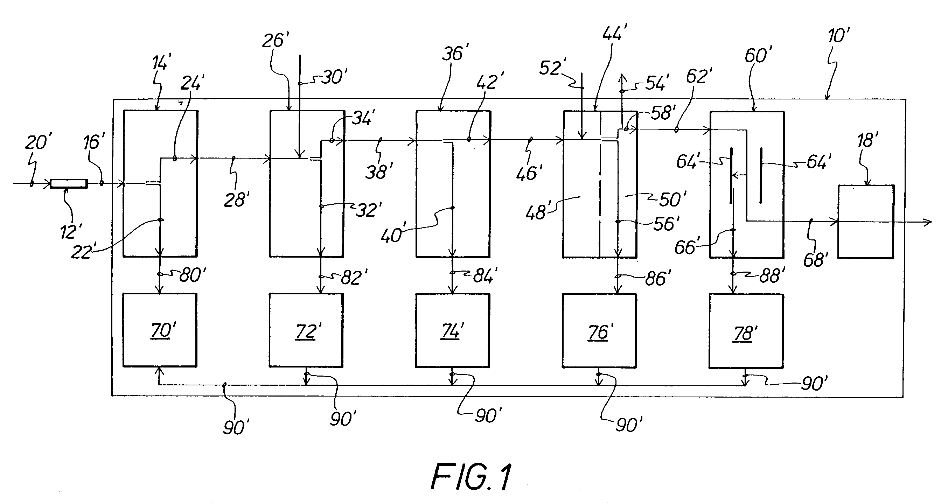

Fig. 1 zeigt eine Anlage 10' mit einem Saugorgan 12', das mit einem Zyklonabscheider 14' verbunden ist, was durch den Pfeil 16' angedeutet wird.

Mit Hilfe einer Unterdruckeinrichtung 18', bei der es sich bspw. um ein Sauggebläse handelt, werden durch das Saugorgan 12' Partikel in die Anlage 10' hineinbefördert, was durch den Pfeil 20' vor dem Saugorgan 12' verdeutlicht wird. Die Partikel 20' werden im Zyklonabscheider 14' einer trockenen ersten Fraktionierung in relativ große erste Partikel und in vergleichsweise kleine zweite Partikel unterworfen. Die Fraktionierung in die großen ersten Partikel ist durch den Pfeil 22' und in die vergleichsweise kleinen zweiten Partikel durch den Pfeil 24' im Zyklonabscheider 14' angedeutet. Die trockenen, vergleichsweise kleinen zweiten Partikel 24' werden in einen Wirbelwäscher 26' der Anlage 10' eingebracht, was durch den Pfeil 28' verdeutlicht ist. Im Wirbelwäscher 26' werden die zweiten Partikel 24' mit Flüssigkeit benetzt, was durch den Pfeil 30' angedeutet wird. Im Wirbelwäscher 26' erfolgt eine zweite Fraktionierung der mit Flüssigkeit benetzten zweiten Partikel 24' in relativ große dritte Partikel, was durch den Pfeil 32' verdeutlicht ist, und in vergleichsweise kleine vierte Partikel, was durch den Pfeil 34' angedeutet ist. Die mit Flüssigkeit benetzten vergleichsweise kleinen vierten Partikel 34' werden dann in einen Tropfenabscheider 36' eingebracht. Das ist durch den Pfeil 38' angedeutet. Im Tropfenabscheider 36' erfolgt eine dritte Fraktionierung der kleinen vierten Partikel 34' in mit Flüssigkeit benetzte große fünfte Partikel, was durch den Pfeil 40' angedeutet ist, und in vergleichsweise kleine mit Flüssigkeit benetzte sechste Partikel, was durch den Pfeil 42' verdeutlicht ist. Die mit Flüssigkeit benetzten kleinen sechsten Partikel 42' werden in einen Entfeuchter 44' eingebracht, was durch den Pfeil 46' verdeutlicht ist. Der Entfeuchter 44' weist eine Erwärmungseinrichtung 48' und eine Entspannungs- bzw. Kondensationseinrichtung 50' auf. In der Erwärmungseinrichtung 48' werden die sechsten Partikel 42' erwärmt, was durch den Pfeil 52' verdeutlicht ist, der eine Wärmezufuhr darstellen soll, und in der Entspannungs- bzw. Kondensationseinrichtung 50' wird den sechsten Partikeln 42' Wärme entzogen, was durch den Pfeil 54' angedeutet ist. Im Entfeuchter 44', d.h. in der Entspannungsbzw. Kondensationseinrichtung 50' erfolgt eine vierte Fraktionierung der kleinen sechsten Partikel 42' in relativ große siebente Partikel, was durch den Pfeil 56' angedeutet ist, und in mit Flüssigkeit benetzte vergleichsweise kleine Aerosolteilchen, was durch den Pfeil 58' verdeutlicht ist. Die kleinen, mit Flüssigkeit benetzten Aerosolteilchen 58' werden in einen elektrostatischen Aerosolabscheider 60' eingebracht, was durch den Pfeil 62' angedeutet wird. Im Aerosolabscheider 60' sind Elektroden 64' schematisch dargestellt, an welche die elektrisch geladenen Aerosolteilchen 58' angezogen werden. An den Elektroden 64' lagern sich die feuchten Aerosolteilchen 58' derart an, daß sie immer größer werdende Tröpfchen bilden, die dann von den Elektroden 64' abrinnen können, was durch den Pfeil 66' angedeutet ist. Am Ausgang des Aerosolabscheiders 60' ist also nur noch Reinstluft vorhanden, was durch den Pfeil 68' angedeutet ist.

Dem Zyklonabscheider 14' ist ein erster Behälter 70', dem Wirbelwäscher 66' ein zweiter Behälter 72', dem Tropfenabscheider 36' ein dritter Behälter 74', dem Entfeuchter 44' bzw. seiner Entspannungs- bzw. Kondensationseinrichtung 50' ein vierter Behälter 76' und dem elektrostatischen Aerosolabscheider 60' ein fünfter Behälter 78' zugeordnet, was durch die Pfeile 80' , 82', 84', 86' bzw. 88' angedeutet ist. Die Behälter 72' , 74', 76' und 78' können mit dem Behälter 70' verbunden sein, was in der Zeichnung durch die Pfeile 90' angedeutet ist. Auf diese Weise ist es möglich, die trockenen, relativ großen ersten Partikel 22' des Zyklonabscheiders 14' im zugehörigen ersten Behälter 70' mit mit Partikeln befrachteter Flüssigkeit aus den Behältern 72', 74', 76' bzw. 78' zu vermischen, um im ersten Behälter 70' einen zu entsorgenden Schlamm herzustellen.

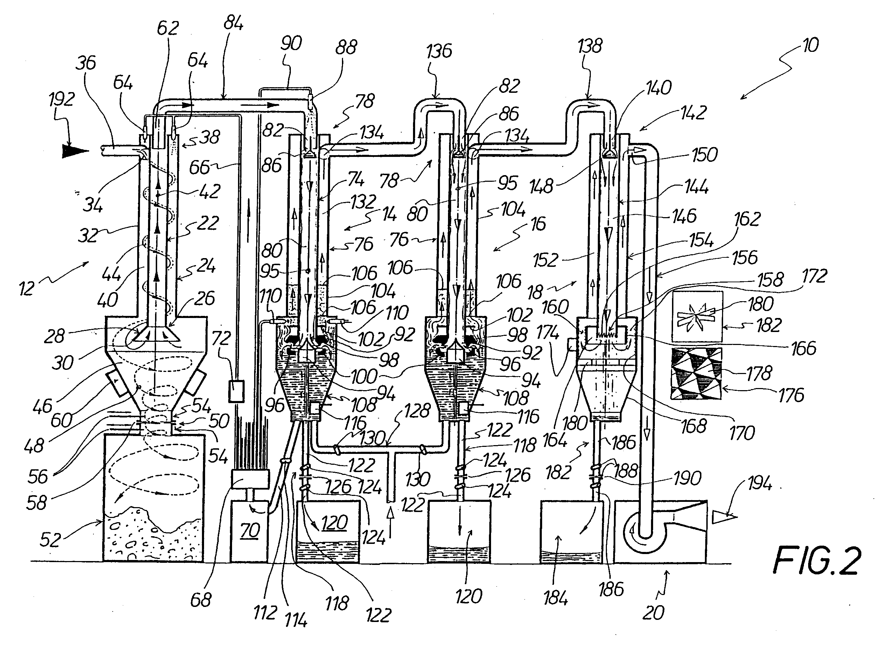

Fig. 2 zeigt die Ausbildung der Anlage 10 zur Partikelentsorgung mit einem Zyklonabscheider 12, einem mit dem Zyklonabscheider 12 verbundenen ersten naßmechanischen Abscheider 14, einem mit dem ersten naßmechanischen Abscheider 14 verbundenen zweiten bzw. letzten naßmechanischen Abscheider 16, einem mit dem letzten naßmechanischen Abscheider 16 verbundenen Endabscheider 18 und einer mit dem Endabscheider 18 verbundenen Unterdruckerzeugungseinrichtung 20, bei der es sich z.B. um eine Saugturbine handelt.

Der Zyklonabscheider 12 weist ein lotrechtes Zentralrohr 22 sowie ein das Zentralrohr 22 in einem Abstand umgebendes zylindrisches Gehäuse 24 auf. Am unteren Endabschnitt 26 des Zentralrohres 22 ist eine konische Erweiterung 28 vorgesehen, deren unterseitiger Rand 30 einen größeren Durchmesser aufweist als der Mantel 32 des zylindrischen Gehäuses 24 des Zyklonabscheiders 12.

Der Zyklonabscheider 12 ist mit einem Einlaß 34 ausgebildet, der mittels einer Rohrleitung 36 mit einem in der Figur nicht gezeichneten Saugorgan fluidisch verbunden ist. Bei diesem Saugorgan kann es sich um eine flexible Saugdüse oder um ein stationäres Düsengebilde handeln. Der Einlaß 34 mündet am oberen Endabschnitt 38 des Zyklonabscheiders 12 in den Ringraum 40 zwischen Zentralrohr 22 und Mantel 32 des Gehäuses 24 in tangentialer und gegen die zentrale Längsachse 42 geneigter Richtung ein. Dadurch ergibt sich im zuletzt erwähnten Ringraum 40 eine schraubenlinienförmige Bewegung der durch die Rohrleitung in den Zyklonabscheider 12 hingesaugten Partikel. Die schraubenlinienförmige Transportbewegung der Partikel ist durch die Linie 44 angedeutet.

Der Mantel 32 des zylindrischen Gehäuses 24 des Zyklonabscheiders 12 ist unterseitig mit einem nach unten konisch verjüngten trichterförmigen Trennraum 46 ausgebildet, in welchen insbes. schwere zu entsorgende Partikel schraubenlinienförmig hineinbewegt werden, was durch die Linie 48 angedeutet ist. Die relativ schweren zu entsorgenden Partikel werden infolge ihrer Massenträgheit vom Trennraum 46 durch einen Verbindungsabschnitt 50 in einen Partikelsammelbehälter 52 hineintransportiert. Der Verbindungsabschnitt 52 weist zwei Rohrabschnitte 54 auf, von denen jeder mit einem Verschlußschieber 56 und mit einem Befestigungsflansch 58 ausgebildet ist.

Der Trennraum 46 des Zyklonabscheiders 12 ist mit einer Rütteleinrichtung 60 versehen.

Der Zyklonabscheider 12 weist einen Auslaß 62 auf, der aus dem oberen Endabschnitt 38 des Zentralrohres 22 ausmündet. In das Gehäuse 24 bzw. in den Ringraum 40 zwischen dem Mantel 32 und dem Zentralrohr 22 münden am oberen Endabschnitt 38 Düsen 64 ein, die mittels einer Rohrleitung 66 über einen Verteiler 68 mit einer Pumpe 70 verbunden sind. In der Rohrleitung 60 befindet sich eine Zeitsteuerventileinrichtung 72.

Der erste naßmechanische Abscheider 14 weist ein lotrechtes Zentralrohr 74 und ein das Zentralrohr 74 in einem Abstand umgebendes zylindrisches Gehäuse 76 auf. Am oberen Endabschnitt 78 des ersten naßmechanischen Abscheiders 14 mündet in den durch das Zentralrohr 74 begrenzten Innenraum 80 ein Einlaß 82 ein, der mittels einer Rohrleitung 84 mit dem Auslaß 62 des Zyklonabscheiders 12 verbunden ist. Im Innenraum 80 des Zentralrohres 74 befindet sich am oberen Endabschnitt 78 ein Ablenkkörper 86, der nach unten konisch erweitert ist. Eine Düse 88 ragt in die Rohrleitung 84 bzw. in den Einlaß 82 des ersten naßmechanischen Abscheiders 14 hinein, die mittels einer Rohrleitung 90 über den Verteiler 68 mit der Pumpe 70 verbunden ist.

Der unterseitige Endabschnitt 92 des ersten naßmechanischen Abscheiders 14 ist mit einem Umlenkkörper 94 versehen, der in axialer Richtung des Abscheiders 14 wunschgemäß verstellbar ist. Der Umlenkkörper 94 ist nach oben spitz zusammenlaufend um die zentrale Längsachse 96 des Abscheiders 14 herum rotationssymmetrisch ausgebildet. Mit Hilfe des Umlenkkörpers 94 ist es möglich, einen gewünschten umlaufenden Umlenkspalt 96 einzustellen. Der Umlenkspalt 96 ist einerseits durch einen ersten Umlenkring 98 und andererseits durch einen zweiten Umlenkring 100 festgelegt. Der erste Umlenkring 98 ist am unteren Endabschnitt 92 des Zentralrohres 74 an dessen Außenseite befestigt und der zweite Umlenkring 100 umgibt den Umlenkkörper 94.

In einem Abstand vom ersten Umlenkring 98 ist an der Außenseite des Zentralrohres 74 ein Ring 102 befestigt,der vom Zentralrohr 74 wegsteht und zur zentralen Längsachse 95 senkrecht ausgerichtet ist. In einem Abstand vom Ring 102 sind zwischen dem Zentralrohr 74 und dem Mantel 104 des Gehäuses 76 voneinander beabstandet zwei Gitterringe 106 vorgesehen. In den durch den Ring 102 und den zum Ring 102 benachbarten Gitterring 106 bestimmten Ringraum münden in den unterseitigen Erweiterungsraum 108 des Abscheiders 14 Flächendüsen 110 ein. Der Erweiterungsraum 108 ist bis zum oberen Gitterring 106 mit Wasser gefüllt, das als Syphon eine Wassersperre bildet.

Der sich nach unten konisch verjüngende Erweiterungsraum 108 ist mittels einer Rohrleitung 112 mit der Pumpe 70 verbunden. In der Rohrleitung 112 ist ein Absperrhahn 114 vorgesehen. Im Erweiterungsraum 108 ist eine auf einen bestimmten hydrostatischen Druck ansprechende Schalteinrichtung 116 angeordnet. Dem naßmechanischen Abscheider 14 bzw. dessen Erweiterungsraum 108 ist über ein Verbindungsrohr 118 ein Wassersammelbehälter 120 zugeordnet. Das Verbindungsrohr 118 weist - ähnlich wie der Verbindungsabschnitt 50 zwischen dem Zyklonabscheider 12 und dem zugehörigen Partikelsammelbehälter 52 zwei Rohrabschnitte 122 auf, von denen jeder mit einem Absperrventil 124 und einem Verbindungsflansch 126 ausgebildet ist. In den Erweiterungsraum 108 mündet ein Frischwasserzulauf 128 ein, der mit einem Absperrhahn 130 versehen ist.

Aus dem oberen Endabschnitt 78 des naßmechanischen Abscheiders 14 bzw. aus dessen Ringraum 132 zwischen Zentralrohr 74 und zylindrischem Gehäuse 76 mündet ein Auslaß 134 aus, der - ähnlich wie der Einlaß 34 in den Zyklonabscheider 12 - tangential und gegen die zentrale Längsachse 95 des naßmechanischen Abscheiders 14 geneigt orientiert ist. Der Auslaß 134 ist mittels einer Rohrleitung 136 mit dem Einlaß 82 eines an den ersten naßmechanischen Abscheider 14 anschließenden zweiten bzw. letzten naßmechanischen Abscheiders 16 strömungsmitteltechnisch angeschlossen. Der naßmechanische Abscheider 16 ist bis auf die Düse 88 und die Fächerdüsen 110 und die mit der Pumpe 70 verbundene Rohrleitung 112 gleich ausgebildet wie der erste naßmechanische Abscheider 14, so daß es sich erübrigt, den naßmechanischen Abscheider 16 detailliert zu beschreiben. Gleiche Einzelheiten der naßmechanischen Abscheider 14 und 16 sind jeweils mit denselben Bezugsziffern bezeichnet.

Der Auslaß 134 des letzten naßmechanischen Abscheiders 16 ist mittels einer Rohrleitung 138 mit dem Endabscheider 18 bzw. mit dessen Einlaß 140 verbunden. Der Einlaß 140 mündet am oberen Endabschnitt 142 des Endabscheiders 18 in dessen lotrechtes Zentralrohr 144, d.h. in den durch das Zentralrohr 144 begrenzten Innenraum 146 ein. Am oberen Endabschnitt 142 des Innenraumes 146 ist ein nach unten konisch erweiterter Ablenkkörper 148 angeordnet. Am oberen Endabschnitt 142 des Endabscheider 18 ist außerdem der Auslaß 150 aus dem Endabscheider 18 vorgesehen, der aus dem Ringraum 152 ausmündet, der zwischen dem Zentralrohr 144 und dem das Zentralrohr 144 in einem Abstand umgebenden Gehäuse 154 des Endabscheiders 18 gegeben ist. Der Auslaß 150 ist mittels einer Rohrleitung 156 mit der Unterdruckerzeugungseinrichtung 20 verbunden.

Der Endabscheider 18 ist mit einem Tropfenabscheider 158 und mit einem elektrostatischen Entfeuchter 160 ausgebildet. Der mechanische Tropfenabscheider 158 ist dadurch realisiert, daß der unterseitige Endabschnitt des Zentralrohres 144 einen gezackten bzw. gezahnten Rand 162 besitzt. Der elektrostatische Entfeuchter 160 wird dadurch gebildet, daß am unterseitigen Endabschnitt des Zentralrohres 144 ein Schirm 164 vorgesehen ist, dessen Außenfläche eine Elektrode 166 aufweist. Am unterseitigen Endabschnitt des Gehäuses 154 ist ein Erweiterungsraum 168 angeordnet, der an seiner Innenfläche dem Schirm 164 gegenüberliegend eine Gegenelektrode 170 aufweist. Durch die Elektrode 166 und die Gegenelektrode 170 wird ein Ringraum 172 festgelegt, in welchem ein elektrostatisches Hochspannungsfeld gebildet wird, wenn an die Elektrode 166 und die Gegenelektrode 170 eine elektrostatische Spannung angelegt wird, die in einer Hochspannungsquelle 174 erzeugt wird.

Wie sich aus dem rechts vom Endabscheider 18 gezeichneten Detailabschnitt 176 ergibt, sind die Elektrode 166 und die Gegenelektrode 170 jeweils mit einer spitz genoppten Oberflächenstruktur 178 ausgebildet.

In einem Abstand unter dem Tropfenabscheider 158 bzw. unter dem Schirm 164 befindet sich im Erweiterungsraum 168 ein auf Massenpotential liegender Sternkörper 180, der rechts neben dem Endabscheider 18 im Detailabschnitt 182 räumlich verdeutlicht ist.

Der Endabscheider 18 bzw. sein Erweiterungsraum 168 ist mittels eines Verbindungsrohres 182 mit einem zugehörigen Wassersammelbehälter 184 verbunden. Das Verbindungsrohr 182 weist - wie die Verbindungsrohre 118 der naßmechanischen Abscheider 14 und 16 - zwei Rohrabschnitte 186 auf, von denen jeder mit einem Absperrventil 188 und einem Verbindungsflansch versehen ist.

Im Betrieb der Anlage 10 wird durch die Rohrleitung 36 beliebiges Material eingesaugt, was durch die Pfeilspitze 192 angedeutet ist. In der Anlage 10 werden quasi alle Partikel festgehalten, so daß stromabwärts nach der Unterdruckserzeugungseinrichtung 20 Reinluft gegeben ist, was durch die Pfeilspitze 194 angedeutet ist.

Wird die Anlage 10 bspw. für Asbestentsorgung angewandt, so kann das in den Wassersammelbehältern 120 der naßmechanischen Abscheider 14 und 16 sowie das im Wassersammelbehälter 184 des Endabscheiders 18 gesammelte, mit Asbestpartikeln befrachtete Wasser als Beton-Mischwasser verwendet werden, mit dem in an sich bekannter Weise Asbestteilchen zur Entsorgung zu einem Körper zusammenbetoniert werden.

Anstelle voneinander getrennter Wassersammelbehälter 120 und 184 ist es selbstverständlich auch möglich, die Anlage 10 mit einem gemeinsamen Wassersammelbehälter auszubilden.

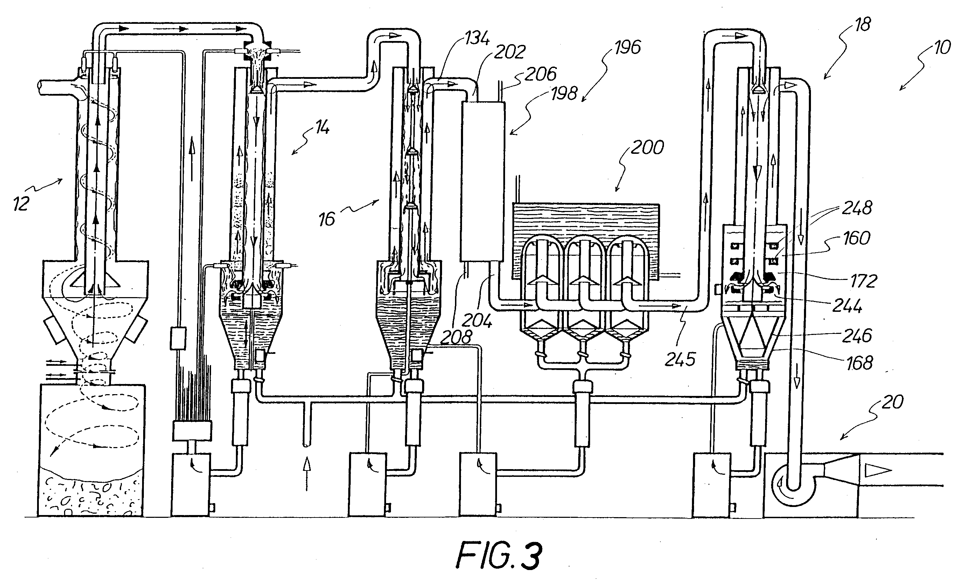

Fig. 3 zeigt eine Ausbildung der Anlage 10 mit einem Zyklonabscheider 12, einem ersten, mit dem Zyklonabscheider 12 verbundenen naßmechanischen Abscheider 14, der als Wirbelwäscher funktioniert, einem mit dem ersten naßmechanischen Abscheider 14 verbundenen zweiten bzw. letzten naßmechanischen Abscheider 16, der als Tropfenabscheider funktioniert, einer mit dem letzten naßmechanischen Abscheider 16 verbundenen Entfeuchtungseinrichtung 196, einem mit der Entfeuchtungseinrichtung 196 verbundenen Endabscheider 18 und einer mit dem Endabscheider 18 verbundenen Unterdruckerzeugungseinrichtung 20. Der Zyklonabscheider 12, die naßmechanischen Abscheider 14 und 16 und der Endabscheider 18, der als elektrostatischer Aerosolabscheider wirksam ist, sind oben ausführlich beschrieben, so daß es sich erübrigt, diese Komponenten der Anlage 10 noch einmal detailliert zu beschreiben.

Die zwischen dem bzw. dem letzten naßmechanischen Abscheider 16 und dem Endabscheider 18 vorgesehene Entfeuchtungseinrichtung 196 weist eine Erwärmungseinrichtung 198 und eine Kondensationseinrichtung 200 auf, wobei die Erwärmungseinrichtung 198 und die Kondensationseinrichtung 200 miteinander in Reihe verbunden sind. Die Erwärmungseinrichtung 198 weist einen Primärkreislauf mit einem Einlaß 202 und mit einem Auslaß 204 auf, wobei der Einlaß 202 mit dem Auslaß 134 des letzten naßmechanischen Abscheiders 16 verbunden ist. Die Erwärmungseinrichtung 198 weist einen Sekundärkreis auf, der durch einen Flüssigkeitszulauf 206 und einen Flüssigkeitsablauf 208 verdeutlicht ist. Durch den Flüssigkeitszulauf 206 wird der Erwärmungseinrichtung 198 eine passend erwärmte Flüssigkeit zugeführt, die eine Wärmequelle bildet, deren Wärme an den Primärkreislauf zwischen Einlaß 202 und Auslaß 204 übertragen wird. Das mit Hilfe der Unterdruckquelle 20 durch den Primärkreislauf transportierte, mit einem bestimmten Anteil zu entsorgender Partikel befrachtete Strömungsmittel, bei dem es sich insbes. um befrachtete Luft handelt, wird in der Erwärmungseinrichtung 198 auf eine geeignete Temperatur erwärmt, so daß es in der der Erwärmungseinrichtung 198 in Strömungsrichtung nachgeschalteten Kondensationseinrichtung 200 möglich ist, die befrachtete Luft zur Kondensation zu bringen. Zu diesem Zweck ist die Kondensationseinrichtung 200 mehrstufig mit mehreren strömungstechnisch in Reihe hintereinander geschalteten Gehäusen 210 ausgebildet, wie auch aus Fig. 2 deutlich ersichtlich ist. Jedes Gehäuse 210 ist oberseitig mit einer Prallkuppel 212 ausgebildet, die bspw.. eine halbkugelförmige Gestalt besitzt. In jedes Gehäuse 210 mündet ein Einlaßrohr 214 ein, dessen Mündungsöffnung 216 von der Innenfläche der entsprechenden Prallkuppel 212 einen kleinen Abstand aufweist. Aus jedem Gehäuse 210 mündet ein Auslaßrohr 218 aus, das eine Mündungsöffnung 220 besitzt, über welcher in einem kleinen Abstand eine Abdeckhaube 222 angeordnet ist.

Jedes Gehäuse 210 weist unterseitig ein FlüssigkeitsSammelvolumen 224 auf. Aus jedem Gehäuse 210 bzw. Flüssigkeits-Sammelvolumen 224 mündet unterseitig eine Rohrleitung 226 aus, die mit einem Absperrventil 228 versehen ist.

Die Kondensationseinrichtung 200 ist mit einem Kühlbehälter 230 ausgebildet, der mit einer Kühlflüssigkeit 232 gefüllt ist. Die Gehäuse 210 ragen mit ihren oberseitigen Prallkuppeln 212 in den Kühlbehälter 230 hinein, so daß die Prallkuppeln 212 von der Kühlflüssigkeit 232 umgeben sind.

Jedes Gehäuse 210 der Kondensationseinrichtung 200 ist doppelwandig mit einer Außenwand 234 und einer von dieser beabstandeten Innenwand 236 versehen, wobei jede Innenwand 236 oberseitig mit einem Umlenkabschnitt 238 ausgebildet ist. Zwischen jedem Umlenkabschnitt 238 der Innenwand 236 und dem zugehörigen Enlaßrohr 214 des entsprechenden Gehäuses 210 der Kondensationseinrichtung 200 ist ein Ringspalt 240 vorhanden. Jede Innenwand 236 ragt mit ihrem unterseitigen Bodenteil 242 in das entsprechende Flüssigkeits-Sammelvolumen 224 hinein.

Die die Erwärmungseinrichtung 198 durchströmende, mit zu entsorgenden Partikeln befrachtete Luft wird durch die Mündungsöffnung 216 des mit dem Auslaß 204 direkt verbundenen Einlaßrohres 214 gegen die Innenfläche der Prallkuppel 212 des in den Figuren links gezeichneten Gehäuses 210 geschleudert, so daß es zu einer Entspannung der befrachteten Luft und gleichzeitig an der Prallkuppel 212 zu einer zusätzlichen Abkühlung durch die Kühlflüssigkeit 232 kommt. Dadurch erfolgt eine Teilkondensation der feuchten, mit Partikeln befrachteten Luft. Das Kondensat kann durch den Ringspalt zwischen der Innen- und der Außenwand 234, 236 des in der Zeichnung links gezeichneten Gehäuses 210 in das entsprechende Flüssigkeits-Sammelvolumen 224 abfließen. Die verbleibende, noch mit Partikeln befrachtete Luft wird dann durch das Auslaßrohr 218 des ersten, links gezeichneten Gehäuses 210 herausgesaugt und durch die Mündungsöffnung 216 des Einlaßrohres 214 des zweiten bzw. mittleren Gehäuses 210 wiederum gegen die zugehörige Prallkuppel 212 geschleudert und hierbei weiter entspannt. Der Vorgang der Entspannung und Kondensation wiederholt sich entsprechend der Anzahl Gehäuse 210 bzw. entsprechend der Anzahl Entspannungsstufen der Kondensationseinrichtung 200 der Entfeuchtungseinrichtung 196. Am Auslaß 245 der Entfeuchtungseinrichtung 196, welcher mit der einen elektrostatischen Aerosolabscheider bildenden Endstufe 18 der Anlage 10 fluidisch verbunden ist, ist die zu reinigende Luft nur mehr mit Aerosolen befrachtet, die dann in dem besagten elektrostatischen Aerosolabscheider 18 abgeschieden werden.

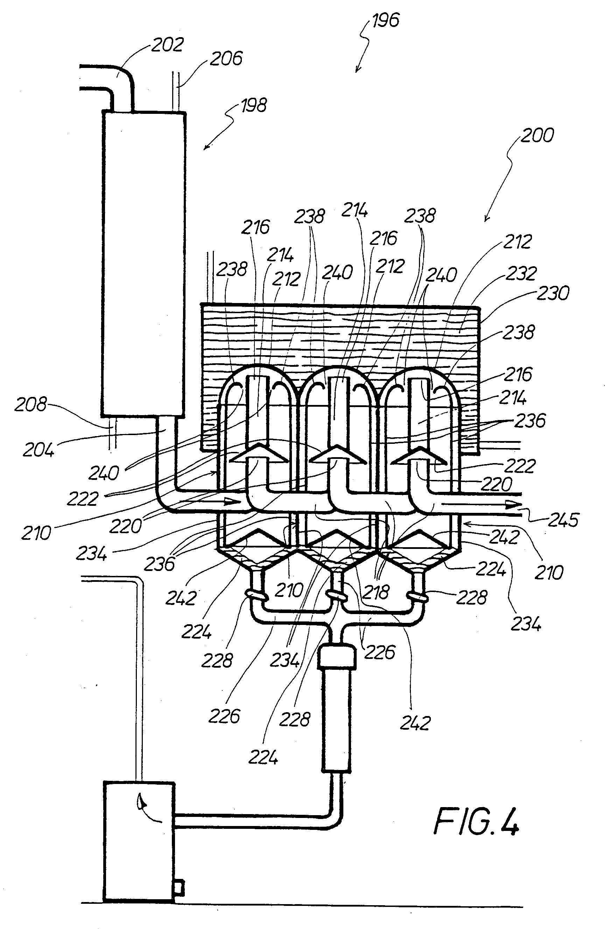

Der in den Figuren 3 und 4 gezeichnete Aerosolabscheider 18 unterscheidet sich von dem in Fig. 2 dargestellten, weiter oben beschriebenen elektrostatischen Aerosolabscheider 18 insbes. dadurch, daß anstelle eines gezackten Randes des Zentralrohres hier eine Umlenkeinrichtung 244 ähnlich der Umlenkeinrichtung des ersten naßmechanischen Abscheiders 14 und daß ein Zentralkörper 146 vorgesehen ist, der im unterseitigen Erweiterungsraum 168 angeordnet ist und von diesem allseitig einen kleinen Abstand besitzt. Desweiteren ist hier im Ringraum 172 eine Elektrodenanordnung 248 vorgesehen, die sich von der weiter oben beschriebenen Elektrodenanordnung unterscheidet. Mit der Bezugsziffer 160 ist ein elektrostatischer Entfeuchter bezeichnet.

## Patentansprüche

1. Verfahren zum Beseitigen von Partikeln, insbes. von gesundheitsgefährdenden Partikeln, wobei an einem Saugorgan (12') mittels einer Unterdruckeinrichtung (18') ein Unterdruck erzeugt wird, **dadurch gekennzeichnet**, daß die Partikel (20') in einem an das Saugorgan (12') angeschlossenen Zyklonabscheider (14') einer trockenen ersten Fraktionierung in relativ große erste Partikel (22') und in vergleichsweise kleine zweite Partikel (24') unterworfen werden, daß dann die trockenen zweiten Partikel (24') in einen Wirbelwäscher (26') eingebracht werden, in welchem sie (24') mit Flüssigkeit (30') benetzt und einer zweiten Fraktionierung in relativ große dritte Partikel (32') und in vergleichsweise kleine vierte Partikel (34') unterworfen werden, daß anschließend die mit Flüssigkeit benetzten vierten Partikel (34') in einen Tropfenabscheider (36' ) eingebracht werden, in welchem sie (34') einer dritten Fraktionierung in relativ große fünfte Partikel ( 40') und in vergleichsweise kleine sechste Partikel (42') unterworfen werden, daß danach die mit Flüssigkeit benetzten sechsten Partikel (42') in einen Entfeuchter (44') eingebracht werden, in welchem sie (24') zuerst (bei 48') erwärmt und anschließend (bei 50') entspannt und kondensiert werden, wobei eine vierte Fraktionierung in relativ große siebente Partikel (56') und in vergleichsweise kleine achte Aerosolteilchen (58') erfolgt, und daß die Aerosolteilchen (58') dann in einen elektrostatischen Aerosolabscheider (60') eingebracht werden, in welchem sie durch elektrostatische Kräfte abgeschieden werden, so daß durch den die an den Aerosolabscheider angeschlossene Unterdruckerzeugungseinrichtung (18') Reinstluft austritt. (Fig. 1)

**2.** Verfahren nach Anspruch 1, **dadurch gekennzeichnet**, daß die ersten Partikel (22') in einem zum Zyklonabscheider (14') zugehörigen ersten Behälter (70'), die mit Flüssigkeit benetzten dritten Partikel (32') in einem zum Wirbelwäscher zugehörigen zweiten Behälter (72'), die mit Flüssigkeit benetzten fünften Partikel (40') in einem zum Tropfenabscheider (36) zugehörigen dritten Behälter (74'), die mit Flüssigkeit benetzten siebenten Partikel (56') in einem zum Entfeuchter (44') bzw. zu dessen Entspannungs- bzw. Kondensationseinrichtung (50') zugehörigen vierten Behälter (76') und die mit Flüssigkeit benetzten, Kondensationskeime bildenden Aerosolteilchen (58') in einem zum elektrostatischen Aerosolabscheider (60') zugehörigen Sammelbehälter (78') gesammelt werden. (Fig. 1)

**3.** Anlage zur Partikelentsorgung mit einer Einrichtung (20) zur Erzeugung eines Unterdrucks, einem Saugorgan und einer zwischen dem Saugorgan und der Unterdruckerzeugungseinrichtung (20) vorgesehenen Abscheidungseinrichtung für die Partikel, **dadurch gekennzeichnet**, daß die Abscheidungseinrichtung zur groben PartikelVorabscheidung einen einen Einlaß (34), einen Auslaß (62) und einen Partikelsammelbehälter (52) aufweisenden Zyklonabscheider (12), mindestens einen an den Zyklonabscheider (12) angeschlossenen, einen Einlaß (82), einen Auslaß (134) und einen Flüssigkeitssammelbehälter (120) aufweisenden naßmechanischen Abscheider und einen an den mindestens einen bzw. an den vom Zyklonabscheider (121) in Strömungsrichtung am weitesten entfernten, letzten naßmechanischen Abscheider (16) angeschlossen, einen Einlaß (140), einen Auslaß (150) und einen Wassersammelbehälter (148) aufweisenden Endabscheider (18) mit einem mechanischen Tropfenabscheider (158) und einem elektrostatischen Entfeuchter 8160) aufweist, wobei der Einlaß (343) des Zyklonabscheiders (12) mit dem Saugorgan, der Auslaß (62) des Zyklonabscheiders (121) mit dem Einlaß (82) des mindestens einen bzw. ersten naßmechanischen Abscheiders (14), der Auslaß (134) des mindestens einen bzw. letzten naßmechanischen Abscheides (16) mit dem Einlaß (140) des Endabscheiders (18) und dessen Auslaß (150) mit der Unterdruckerzeugungseinrichtung (20) mittels Rohrleitungen (36, 84, 136, 138, 156) verbunden ist. (Fig.2)

**4.** Anlage nach Anspruch 3, **dadurch gekennzeichnet,** daß der Zyklonabscheider (12) ein lotrechtes Zentralrohr (22) und ein das Zentralrohr (22) in einem Abstand umgebendes zylindrisches Gehäuse (24) aufweist, wobei der Einlaß (34) in den Zyklonabscheider (12) an dessen oberem Endabschnitt (38) in tangentialer und gegen die vertikale Längsachse (42) des Zyklonabscheiders (12) geneigter Richtung in den Mantel (32) des Gehäuses (24) einmündet, der Auslaß (62) des Zyklonabscheiders (12) aus dem oberen Endabschnitt (38) des Zentralrohres (22) axial ausmündet, und der Mantel (32) des Gehäuses (24) unterseitig mit einem nach unten konisch verjüngten trichterförmigen Trennraum (46) ausgebildet ist, welcher den unterseitigen Endabschnitt (26) des Zentralrohres (22) umgibt und welcher mit einem Verbindungsabschnitt (50) in den Partikelsammelbehälter (52) einmündet.

**5.** Anlage nach Anspruch 4,
**dadurch gekennzeichnet**,
daß der unterseitige Endabschnitt (26) des Zentralrohres (22) mit einer konischen Erweiterung (28) ausgebildet ist, wobei der Außendurchmesser des unterseitigen Randes (30) der Erweiterung (28) größer ist als der lichte Innendurchmesser des Mantels (32) des zylindrischen Gehäuses (24).

**6.** Anlage nach Anspruch 4,
**dadurch gekennzeichnet**,
daß der Verbindungsabschnitt (50) zwischen trichterförmigem Trennraum (46) und Partikelsammelbehälter (52) zwei Rohrabschnitte (54) aufweist, wobei jeder Rohrabschnitt (54) mit einem Verschlußschieber (56) und einem Montageflansch (58) zur abdichtenden Verbindung der beiden Rohrabschnitte (54) ausgebildet ist.

**7.** Anlage nach einem der Ansprüche 4 bis 6,
**dadurch gekennzeichnet**,
daß der trichterförmige Trennraum (46) des Zyklonabscheiders (121) mit einer Rütteleinrichtung (60) versehen ist.

**8.** Anlage nach einem der Ansprüche 3 bis 7,
**dadurch gekennzeichnet**,
daß in das Gehäuse (24) des Zyklonabscheiders (12) oberseitig Düsen (64) einmünden, die zum Einleiten einer Reinigungs- und/oder Partikelbinde-Flüssigkeit in den ringförmigen Raum (40) zwischen Zentralrohr (22) und Gehäuse (24) bzw. zum Besprühen der Außenoberfläche des Zentralrohres (22) und der Innenoberfläche des Gehäuses (24) vorgesehen sind.

**9.** Anlage nach Anspruch 3,
**dadurch gekennzeichnet**,
daß der mindestens eine naßmechanische Abscheider (14, 16) ein vertikales Zentralrohr (74) und ein das Zentralrohr (74) in einem Abstand umgebendes zylindrisches Gehäuse (76) aufweist, wobei der Einlaß (82) in den entsprechenden Abscheider (14, 16) in den oberen Endabschnitt (78) des zugehörigen Zentralrohres (74) in axialer Richtung einmündet, in welchem zum Ablenken von Flüssigkeit gegen die innere Oberfläche des Zentralrohres (74) ein sich nach unten konisch erweiternder Ablenkkörper (86) vorgesehen ist, der Auslaß (134) am oberen Endabschnitt (78) des das entsprechende Zentralrohr (74) umgebenden Mantels (104) des Gehäuses (76) vorgesehen und in tangentialer und gegen die zentrale Längsachse (95) geneigter Richtung orientiert ist, und das Gehäuse (76) unterseitig mit einem Erweiterungsraum (108) ausgebildet ist, welcher den unterseitigen Endabschnitt (92) des Zentralrohres (74) umgibt und welcher mit einem Verbindungsrohr (118) in den zugehörigen Wassersammelbehälter (120) einmündet.

**10.** Anlage nach Anspruch 9,
**dadurch gekennzeichnet,**
daß der unterseitige Endabschnitt (92) des Zentralrohres (74) des/jedes naßmechanischen Abscheiders (14, 16) mit einem nach oben zusammenlaufenden, rotationssymmetrisch geformten Umlenkkörper (94) ausgebildet ist, der zur Einstellung eines gewünschten, um die zentrale Längsachse (95) umlaufenden Umlenkspaltes (96) in axialer Richtung relativ zum Zentralrohr (74) verstellbar ist.

**11.** Anlage nach Anspruch 10,
**dadurch gekennzeichnet**,
daß der Umlenkspalt (96) durch einen das Zentralrohr (74) des entsprechenden naßmechanischen Abscheiders (14, 16) umschließenden ersten Umlenkring (98) und einen den Umlenkkörper (94) umgebenden zweiten Umlenkring (100) begrenzt bzw. festgelegt ist.

**12.** Anlage nach einem der Ansprüche 9 bis 11,
**dadurch gekennzeichnet**,
daß am unteren Endabschnitt (92) des Zentralrohres (74) des entsprechenden naßmechanischen Abscheiders (14, 16) zwischen dem Zentralrohr (74) und dem Mantel (104) des Gehäuses (76) mindestens ein Gitterring (106) vorgesehen ist.

**13.** Anlage nach einem der Ansprüche 9 bis 12,
**dadurch gekennzeichnnet,**

daß in den Erweiterungsraum (108) in der Nachbarschaft des Mantels (104) des Gehäuses (76) der mindestens einen bzw. des mit dem Zyklonabscheider (12) verbundenen ersten naßmechanischen Abscheiders (14) Fächerdüsen (110) hineinragen.

**14.** Anlage nach einem der Ansprüche 9 bis 13,
**dadurch gekennzeichnet,**

daß das Verbindungsrohr (118) zwischen dem Erweiterungsraum (108) des entsprechenden naßmechanischen Abscheiders (14, 16) und dem zugehörigen Wassersammelbehälter (120) zwei Rohrabschnitte (122) aufweist, wobei jeder Rohrabschnitt (122) mit einem Absperrventil (124) und einem Verbindungsflansch (126) zur abdichtenden Verbindung der beiden Rohrabschnitte (122) ausgebildet ist.

**15.** Anlage nach einem der Ansprüche 9 bis 14,
**dadurch gekennzeichnet,**

daß der Erveiterungsraum (108) des/jedes naßmechanischen Abscheiders (14, 16) mit einer auf hydrostatischen Druck ansprechenden Schalteinrichtung (116) versehen ist.

**16.** Anlage nach einem der Ansprüche 9 bis 15,
**dadurch gekennzeichnet,**

daß in den Erweiterungsraum (108) des/jedes naßmechanischen Abscheiders (14, 16) ein Frischwasserzulauf (128) einmündet, der mit einem Absperrhahn (130) versehen ist.

**17.** Anlage nach einem der Ansprüche 8 bis 16,
**dadurch gekennzeichnet,**

daß in das Zentralrohr (74) des mindestens einen bzw. des mit dem Zyklonabscheider (12) verbundenen ersten naßmechanischen Abscheiders (14) oberseitig eine Düse (88) einmündet, die zum Beaufschlagen des entsprechenden Ablenkkörpers (86) mit Flüssigkeit vorgesehen ist, wobei die Düse (88) über eine Pumpe (70) mit dem Erweiterungsraum (108) des bzw. des ersten naßmechanischen Abscheiders (14) fluidisch verbunden ist.

**18.** Anlage nach Anspruch 8, 13 und 17,
**dadurch gekennzeichnet,**

daß mit der Pumpe (70) auch die in den Zyklonabscheider (12) einmündenden Düsen (64) und die Fächerdüsen (110) des bzw. des ersten naßmechanischen Abscheiders (14) fluidisch verbunden sind, wobei in der die Pumpe (70) mit den Düsen (64) des Zyklonabscheiders (12) verbindenden Rohrleitung (66) eine Zeitsteuerventileinrichtung (72) vorgesehen ist.

**19.** Anlage nach Anspruch 3,
**dadurch gekennzeichnet,**

daß der Endabscheider (18) ein vertikales Zentralrohr (144) und ein das Zentralrohr (144) in einem Abstand umgebendes zylindrisches Gehäuse (154) aufweist, wobei der Einlaß (140) in den Endabscheider (18) in den oberen Endabschnitt (142) des Zentralrohres (144) axial einmündet, in welchem zum Ablenken von Flüssigkeit gegen die Innenoberfläche des Zentralrohres (144) ein sich nach unten konisch erweiternder Ablenkkörper (148) vorgesehen ist, der Auslaß (150) sich am oberen Endabschnitt des Gehäuses (154) befindet und das Gehäuse (154) unterseitig einen Erweiterungsraum (168) aufweist, welcher den unterseitigen Endabschnitt des Zentralrohres (144) umgibt und welcher mit einem Verbindungsrohr (182) in den zugehörigen Wassersammelbehälter (184) einmündet.

**20.** Anlage nach Anspruch 3 oder 19,
**dadurch gekennzeichnet,**

daß der unterseitige Endabschnitt des Zentralrohres (144) des Endabscheiders (18) zur Ausbildung des mechanischen Tropfenabscheiders (158) einen gezackten bzw. gezahnten Rand (162) aufweist.

**21.** Anlage nach einem der Ansprüche 3, 19 oder 20,
**dadurch gekennzeichnet,**

daß vom unterseitigen Endabschnitt des Zentralrohres (144) des Endabscheiders (18) zur Ausbildung des elektrostatischen Entfeuchters (160) radial ein Schirm (164) wegsteht, dessen Außenfläche eine auf

14

einem Potential einer elektrostatischen Hochspannungsquelle (174) befindliche Elektrode (166) aufweist, und daß der dem Schirm radial gegenüberliegende Erweiterungsraum (168) an seiner Innenfläche mit einer auf dem Gegenpotential der Hochspannungsquelle (174) befindlichen Gegenelektrode (170) versehen ist.

22. Anlage nach Anspruch 21,
**dadurch gekennzeichnet,**
daß die Elektrode (166) und die Gegenelektrode (170) jeweils eine spitz genoppte Oberflächenstruktur (178) aufweisen.

23. Anlage nach einem der Ansprüche 19 bis 22,
**dadurch gekennzeichnet,**
daß das Verbindungsrohr (182) zwischen dem Erweiterungsraum (168) und dem zugehörigen Wassersammelbehälter (184) des Endabscheiders (18) zwei Rohrabschnitte (186) aufweist, von denen jeder mit einem Absperrventil (188) und einem Verbindungsflansch (190) zum abdichtenden Verbinden der beiden Rohrabschnitte (176) ausgebildet ist.

24. Anlage nach Anspruch 3,
**dadurch gekennzeichnet,**
daß zwischen dem mindestens einen bzw. dem letzten naßmechanischen Abscheider (16) und dem Endabscheider (18) eine Entfeuchtungseinrichtung (196) vorgesehen ist, die eine Erwärmungseinrichtung (198) und eine mit der Erwärmungseinrichtung (198) in Reihe verbundene Kondensationseinrichtung (200) aufweist, wobei die Erwärmungseinrichtung (198) an den bzw. den letzten naßmechanischen Abscheider (16) und die Kondensationseinrichtung (200) an den Endabscheider (18) angeschlossen ist. (Fig. 3, 4)

25. Anlage nach Anspruch 24,
**dadurch gekennzeichnet**,
daß die Erwärmungseinrichtung (198) einen Primärkreislauf mit einem Einlaß (202) und einem Auslaß (204) und eine wärmetechnisch an den Pirmärkreislauf gekoppelte Wärmequelle aufweist.

26. Anlage nach Anspruch 25,
**dadurch gekennzeichnet**,
daß die Wärmequelle durch eine erwärmte Flüssigkeit gebildet ist, die einen Sekundärkreis der Erwärmungseinrichtung (198) durchströmt.

27. Anlage nach Anspruch 24,
**dadurch gekennzeichnet**,
daß die Kondensationseinrichtung (200) mindestens ein Gehäuse (210) mit einer oberseitigen Prallkuppel (212), einem in das Gehäuse (210) einmündenden und in die Prallkuppel (212) hineinstehenden Einlaßrohr (214) und einem aus dem Gehäuse (210) ausmündenden Auslaßrohr (218) und ein unterseitiges Flüssigkeits-Sammelvolumen (224) aufweist, wobei das/jedes Gehäuse (210) zumindest mit seiner oberseitigen Prallkuppel (212) in einen mit einem Kühlmedium (232) gefüllten Kühlbehälter (230) hineinragt.

28. Anlage nach Anspruch 27,
**dadurch gekennzeichnet**,
daß die Mündungsöffnung (216) des Einlaßrohres (214) von der Innenfläche der Prallkuppel (212) einen kleinen Abstand aufweist.

29. Anlage nach Anspruch 27,
**dadurch gekennzeichnet**,
daß über der Mündungsöffnung (220) des Auslaßrohres (218) eine Abdeckhaube (222) vorgesehen ist, die von der Mündungsöffnung (220) des Auslaßrohres (218) einen kleinen Abstand aufweist.

30. Anlage nach einem der Ansprüche 27 bis 29,
**dadurch gekennzeichnet**,
daß das/jedes Gehäuse (210) der Kondensationseinrichtung (200) doppelwandig mit einer Außenwand

(234) und einer von dieser beabstandeten Innenwand (236) ausgebildet ist, wobei die Innenwand (236) mit einem oberseitigen Umlenkabschnitt (238) ausgebildet und zwischen dem Umlenkabschnitt (238) und dem Einlaßrohr (214) ein Ringspalt (240) vorhanden ist.

31. Anlage nach Anspruch 30,
**dadurch gekennzeichnet**,
daß die Innenwand (236) mit einem unterseitigen Bodenteil (242) in das Flüssigkeits-Sammelvolumen (224) des Gehäuses (210) hineinragt.

32. Anlage nach einem der Ansprüche 27 bis 31,
**dadurch gekennzeichnet**,
daß aus dem/jedem Gehäuse (210) eine Rohrleitung (226) ausmündet, die mit einem Absperrventil (228) versehen ist.

33. Anlage nach einem der Ansprüche 27 bis 32,
**dadurch gekennzeichnet**,
daß die Kondensationseinrichtung (220) mehrstufig mit mehreren strömungstechnisch in Reihe hintereinandergeschalteten Gehäusen (210) ausgebildet ist.

*FIG.1*

FIG.2

EP 0 521 306 A2

FIG.3

FIG.4